# EUROPÄISCHE PATENTSCHRIFT

(11) **EP 4 217 641 B1**
(45) Veröffentlichungstag und Bekanntmachung des Hinweises auf die Patenterteilung: **05.08.2026**
(21) Anmeldenummer: 21778475.0
(22) Anmeldetag: 21.09.2021
(51) Int. Cl.: F17C 13/04, F16K 31/06

(54) **ELEKTROMAGNETISCHES VENTIL, INSBESONDERE FÜR KRAFTFAHRZEUGE**
ELECTROMAGNETIC VALVE, IN PARTICULAR FOR MOTOR VEHICLES
SOUPAPE ÉLECTROMAGNÉTIQUE CONÇUE EN PARTICULIER POUR DES VÉHICULES AUTOMOBILES

(30) Priorität: 28.09.2020 DE 102020125283
(43) Veröffentlichungstag der Anmeldung: 02.08.2023
(73) Patentinhaber: PTEC - Pressure Technology GmbH, 51399 Burscheid (DE)
(72) Erfinder: PERTHEL, Klaus, 51399 Burscheid (DE)
(74) Vertreter: Freischem & Partner Patentanwälte mbB
(86) Internationale Anmeldenummer: PCT/EP2021/075848
(87) Internationale Veröffentlichungsnummer: WO 2022/063733

(56) Entgegenhaltungen:
- DE-A1- 102013 019 877
- DE-A1- 102015 005 977
- DE-A1- 102016 008 058
- US-A- 5 188 017
- US-A1- 2004 036 046

## Beschreibung

### Technisches Gebiet

Die Erfindung betrifft ein elektromagnetisches Ventil, insbesondere für eine Gasflasche für ein gasbetriebenes Kraftfahrzeug, gemäß dem Oberbegriff des Patentanspruchs 1.

### Stand der Technik

Derartige elektromagnetischen Ventile sind beispielsweise bekannt aus den Druckschriften EP 1 682 801 B1, DE 10 2013 019 877 A1, DE 10 2015 005 977 A1 und DE 10 2016 008 058 A1. Die hier beschriebenen elektromagnetischen Ventile weisen einen Stößel mit einer Vorsteuerdichtung auf, welcher durch die Bewegung eines Ankers aufgrund eines durch eine Spule fließenden Stroms von einem Dichtsitz an einem Kolben abgehoben wird. Hierdurch wird eine Strömung durch einen Druckabbaukanal, auch Pilotbohrung genannt, im Kolben freigegeben, wodurch die Öffnungsbewegung des Kolbens eingeleitet wird. Bei geöffnetem Kolben ist während eines Betankens eine Gasströmung von einem Tankanschluss in die Gasflasche möglich. Während des Fahrbetriebs kann bei geöffnetem Kolben Gas aus der Flasche durch das Ventil austreten. Die DE 10 2013 019 877 A1 zeigt einen Führungsstift, welcher mit einem Grundkörper fest verbunden ist und in eine in einem Entnahmekolben angeordnete Führungsbohrung eintaucht. Die DE 10 2015 005 977 A1 offenbart einen Führungsstift an einem Absperrkolben, der in eine Bohrung eines Zwischenelementes hineinragt.

Bei allen vorbekannten elektromagnetischen Ventilen sind die beweglichen Elemente, insbesondere die in einer Druckhülse verschiebbaren Anker und Absperrkolben, rotationssymmetrisch ausgebildet und in einer zylinderförmigen Bohrung der Druckhülse aufgenommen. Insbesondere beim Betanken wird der Gasflasche durch das Ventil ein Gas mit hohem Druck zugeführt. Daraus ergeben sich hohe Strömungsgeschwindigkeiten. Die Gasströmung kann die beweglichen Elemente innerhalb des Ventils zu Rotationen anregen. Derartige Rotationen haben unerwünschte Geräuschentwicklungen zur Folge. Die drei genannten deutschen Druckschriften weisen Sicherungsstifte auf, die derartigen Rotationen entgegenwirken sollen. Diese Stifte erfordern mehrteilige Druckhülsen oder Öffnungen in der Druckhülse, welche deren Dichtigkeit beeinträchtigen können.

Auch die Druckschrift US 5 188 017 A zeigt ein gattungsgemäßes elektromagnetisches Ventil. Die Druckschrift DE 10 2016 008 058 A1 zeigt ein Ventil mit einer Verdrehsicherung, die ein Verdrehen des Absperrkolbens gegenüber dem mit ihm zusammenwirkenden Ventilsitz verhindert. Die Druckschrift US 2004 0036046 A1 zeigt dagegen kein Hochdruckventil mit einseitig geschlossener Hülse und axial gegen einen Dichtsitz bewegbarem Kolben, sondern ein Sauerstoffventil mit einer beidseitig offenen Hülse, in der ein Ventilschaft verschiebbar angeordnet ist.

### Kurzbeschreibung der Erfindung

Aufgabe der Erfindung ist es, bei optimaler Dichtigkeit unerwünschte Geräuschentwicklungen bei elektromagnetischen Ventilen zu vermeiden. Eine weitere Aufgabe ist die Erzielung eines zuverlässigen Betriebs des Ventils.

Zur Aufgabenlösung wird ein elektromagnetisches Ventil mit den Merkmalen des Patentanspruchs eins vorgeschlagen. Weitere vorteilhafte Merkmale ergeben sich aus den Unteransprüchen.

Gemäß der hier beschriebenen Neuentwicklung wird ein elektromagnetisches Ventil, insbesondere für eine Gasflasche für gasbetriebene Kraftfahrzeuge, vorgeschlagen, welches unter anderem folgende Merkmale aufweist:
- einen Hauptkörper;
- eine einseitig geschlossene Druckhülse, die an dem Hauptkörper befestigt ist;
- eine die Druckhülse umgebende Spule;
- mindestens einen in der Druckhülse angeordneten Anker;
- und mindestens einen Absperrkolben, der axial verschiebbar in der Druckhülse aufgenommen ist und der eine Hauptdichtung aufweist, welche gegen einen Dichtsitz des Hauptkörpers drückbar ist.

Der axial verschiebbare Absperrkolben und die Druckhülse weisen formschlüssig ineinandergreifende Führungselemente auf, die den Absperrkolben verdrehfest an der Druckhülse führen. Auf diese Weise wird ein Rotieren des Absperrkolbens in der Druckhülse unterbunden und eine unerwünschte Geräuschentwicklung vermieden. Die rotationshemmenden Elemente sind sämtlich innerhalb einer geschlossenen Druckhülse ohne Wanddurchbrüche angeordnet und beeinträchtigen folglich nicht die Dichtigkeit des Hochdruckbereichs innerhalb der Druckhülse. Durch die Drehsicherung des Absperrkolbens in der Druckhülse kann Eine Verdrehsicherung des Absperrkolbens gegenüber dem Ventilsitz, wie sie die DE 10 2016 008 058 A1 vorschlägt, entfallen.

Die Führungselemente zum Blockieren der Kolbenrotationen können auf verschiedene Weisen realisiert sein. Eine Möglichkeit ist beispielsweise, die innere Bohrung der Druckhülse unrund auszubilden und der Außenkontur des Absperrkolbens einen entsprechenden Querschnitt zu verleihen. Wenn der Aufnahmeraum für den Absperrkolben beispielsweise einen dreieckigen oder viereckigen Querschnitt aufweist, ist ein Rotieren des Absperrkolben zuverlässig ausgeschlossen. Allerdings hat die rotationssymmetrische Form der Bauelemente des elektromagnetischen Ventils auch Vorteile. Sie sorgt beispielsweise für eine gleichmäßige Druckbeaufschlagung der Bauelemente, was angesichts der hohen Drücke innerhalb des Ventils anzustreben ist.

Bei rotationssymmetrischen Bauelementen können auch zusätzliche ineinandergreifende Teile dazu verwendet werden, die Drehung zwischen Absperrkolben und Druckhülse zu blockieren. In der Praxis können beispielsweise die Führungselemente folgendes umfassen:
- eine axiale Nut;
- einen Führungskörper;
wobei die Nut an einem der beiden zueinander drehgesicherten Elemente, nämlich Druckhülse und Absperrkolben, angeordnet ist und wobei der Führungskörper an dem anderen dieser beiden Elemente angeordnet ist und in die Nut hineinragt.

Dabei muss sich die Nut nur über eine gewisse axiale Länge erstrecken, welche mindestens der axialen Relativbewegung zwischen Absperrkolben und Druckhülse während des Betriebs des elektromagnetischen Ventils entspricht. Diese Länge kann in der Praxis wenige Millimeter betragen. Andererseits ist die Länge der Nut und auch die axiale Länge des Führungskörpers so zu wählen, dass eine hinreichende Flexibilität erreicht wird und die Bauelemente leicht zu montieren sind. Bei einer Länge des Absperrkolbens von ca. 20 mm liegt die axiale Länge der Nut und auch des Verbindungselements zwischen 5 mm und 10 mm.

In der Praxis kann ferner in der Druckhülse ein axial verschiebbarer Anker aufgenommen sein, der verdrehfest mit dem Absperrkolben verbunden ist. Somit sind alle beweglichen Teile in der Druckhülse gegen Verdrehen gesichert und eine Geräuschentwicklung durch strömungsinduzierte Rotation der beweglichen Bauteile in der Druckhülse unterbunden.

In der Praxis kann die Nut an der Druckhülse angeordnet sein, wobei der Absperrkolben eine Aussparung aufweist, in die der Führungskörper eingefügt ist. Insbesondere kann der Absperrkolben einen Kopfabschnitt und einen Grundabschnitt aufweisen, wobei der Kopfabschnitt einen größeren Durchmesser als der Grundabschnitt aufweist und die Aussparung im Grundabschnitt angeordnet ist.

Diese geometrische Form des Absperrkolbens ist vorteilhaft. Durch den größeren Durchmesserbereich des Kopfabschnitts kann der Absperrkolben eine ausreichend große, ringförmige Hauptdichtung aufnehmen. Gleichzeitig weisen sowohl Absperrkolben als auch Druckhülse keinen übermäßig großen Bauraum auf.

In der Praxis kann die Druckhülse an ihrem offenen Endbereich einen ersten Innendurchmesser zur Aufnahme des Kopfabschnitts und an dem daran anschließenden mittleren Bereich einen zweiten Innendurchmesser zur Aufnahme des Grundabschnitts aufweisen, wobei der zweite Innendurchmesser kleiner als der erste ist. Durch die Schulter des Absperrkolbens, die sich zwischen dem Grundabschnitt und dem Kopfabschnitt ergibt, und die einem Absatz in der inneren Bohrung der Druckhülse aufgrund des größeren Innendurchmessers zur Aufnahme des Kopfabschnitts entspricht, ist die Länge, um die der Absperrkolben in die Druckhülse eingeschoben werden kann, klar definiert.

In der Praxis kann ein erster Anker in die Druckhülse eingepresst sein und ein zweiter Anker kann in der Druckhülse zwischen dem ersten Anker und dem Absperrkolben axial verschiebbar aufgenommen sein. Der erste Anker, auch Kern genannt, kann aus einem magnetisierbaren Material, beispielsweise rostfreiem Stahl bestehen. Dieser erste Anker ist durch das Einpressen in der Druckhülse festgelegt. Er kann weder axial verlagert werden noch sich drehen. Der zweite Anker ist dagegen axial verschiebbar in der Druckhülse aufgenommen. Er kann aus dem gleichen Material bestehen wie der erste Anker und durch eine Schraubenfeder vom ersten Anker weggedrückt werden, so dass im stromlosen Zustand des elektromagnetischen Ventils ein Spalt zwischen dem ersten Anker und dem zweiten Anker vorhanden ist. Sobald Strom durch die Spule fließt, schließt sich der Spalt, weil die Magnetkräfte den zweiten Anker zum ersten Anker hinziehen.

In der Praxis können der zweite Anker und der Absperrkolben formschlüssige ineinandergreifende Verbindungselemente aufweisen, die den zweiten Anker und den Absperrkolben verdrehfest verbinden. Der erste Anker ist durch das Einpressen in die Druckhülse gegen Verdrehen gesichert. Der Absperrkolben ist durch die formschlüssigen Führungselemente in Bezug auf die Druckhülse gegen Verdrehen gesichert. Der axial bewegliche zweiter Anker ist seinerseits durch die formschlüssig ineinandergreifenden Verbindungselemente gegenüber dem Absperrkolben und damit gegenüber der Druckhülse gegen Verdrehen gesichert. Die Verdrehsicherung der beweglichen Teile des elektromagnetischen Ventils vermeidet zuverlässig unerwünschte Geräuschentwicklungen während des Betankens.

In der Praxis können die Verbindungselemente eine axiale Bewegung des zweiten Ankers auf den Absperrkolben übertragen. Insbesondere können die Verbindungselemente so ausgebildet sein, dass der zweite Anker nicht nur die Vorsteuerdichtung von der Pilotbohrung wegbewegt, sondern auch den Absperrkolben mitnimmt, damit dessen Hauptdichtung den Gasfluss im elektromagnetischen Ventil freigibt.

Zu diesem Zweck kann in der Praxis der Absperrkolben einen Verbindungszapfen aufweisen, dessen zum geschlossenen Ende der Druckhülse weisendes Ende einen vergrößerten Zapfenkopf aufweist. Der zweite Anker kann eine Ausnehmung für den Zapfenkopf und einen Durchtrittsbereich für den Verbindungszapfen aufweisen, wobei der Zapfenkopf Randabschnitte des Durchtrittsbereichs formschlüssig hintergreift und wobei der Verbindungszapfen verdrehfest im Durchtrittsbereich gehalten ist. Der Verbindungszapfen kann beispielsweise flache Seitenwände aufweisen, die gegen einander gegenüberliegenden flachen Seitenwänden des Durchtrittbereichs anliegen. Durch diese Konstruktion wird nicht nur die Mitnahme des Absperrkolbens durch den zweiten Anker sichergestellt, sondern auch die Verdrehsicherung des zweiten Ankers gegenüber dem Absperrkolben.

In der Praxis kann die Druckhülse aus austenitischem Stahl gefertigt sein, der vorzugsweise einen hohen Nickelanteil aufweist. Ein derartiger Stahl ist besonders gut für Ventile geeignet, die bei Wasserstoff-Speichersystemen eingesetzt werden. Er ist gegen Versprödung durch Wasserstoffkontakt beständig.

In der Praxis kann die Druckhülse ein einstückiges Bauteil sein. Eine einstückige Druckhülse weist gegenüber einer zusammengesetzten Druckhülse eine verbesserte Dichtigkeit auf.

### Kurze Beschreibung der Zeichnungen

Weitere praktische Ausführungsformen und Vorteile der Erfindung sind nachfolgend im Zusammenhang mit den Zeichnungen beschrieben.
[Fig.1] zeigt einen Längsschnitt durch ein hier beschriebenes elektromagnetisches Ventil.
[Fig.2] zeigt einen vergrößerten Längsschnitt der Druckhülse mit Spule und darin befindlichen funktionalen Elementen des Ventils aus Fig. 1.
[Fig.3] zeigt eine dreidimensionale Explosionsansicht der Druckhülse, der Anker und des Absperrkolbens des Ventils aus den Figuren 1 und 2.
[Fig.4] zeigt eine dreidimensionale Explosionsansicht des beweglichen Ankers und des Absperrkolbens des Ventils aus den Figuren 1 und 2 in getrennter Stellung.
[Fig.5] zeigt eine der Fig. 4 entsprechende Ansicht des beweglichen Ankers und des Absperrkolbens des Ventils in verbundener Stellung.

### Beschreibung der Ausführungsformen

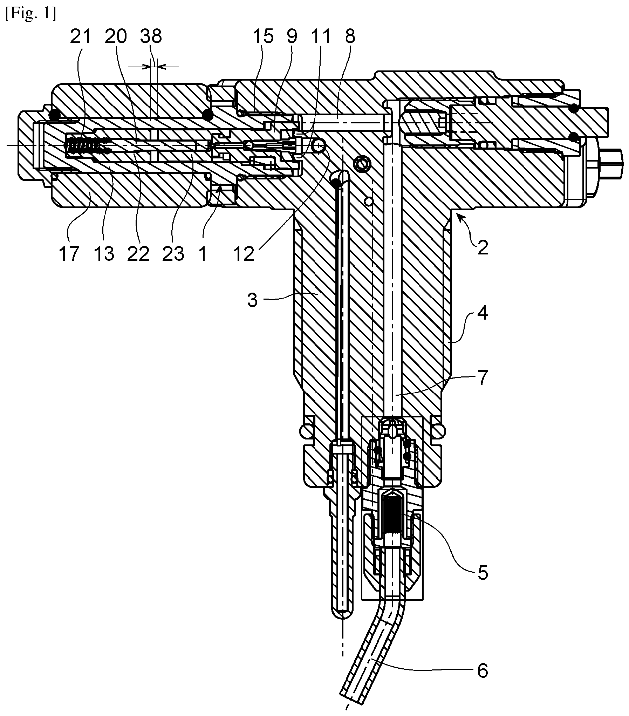

In der Fig.1 ist zu erkennen, dass das elektromagnetische Ventil 1 in einem Hauptkörper 2, auch Ventilkörper genannt, angeordnet ist. Der Hauptkörper 2 weist einen zylindrischen Abschnitt 3 mit einem Außengewinde 4 auf. Das Außengewinde 4 ist dazu vorgesehen, in ein Innengewinde einer Gasflasche (nicht dargestellt) eingeschraubt zu werden. An dem in Fig. 1 unteren Ende des zylindrischen Abschnitts 3 ist über einen Filter 5 ein Injektor 6 angeordnet, durch den Gas in die Gasflasche einströmt und aus der Gasflasche ausströmt. Zu dem Injektor 6 führt ein Hauptkanal 7, der über einen Querkanal 8 zu einem Ringraum führt, der die Stirnseite eines Absperrkolbens 9 des Ventils 1 umgibt. Der Hauptkörper 2 kann weitere fluidtechnische Bauelemente aufweisen, die in den Zeichnungen nicht dargestellt sind.

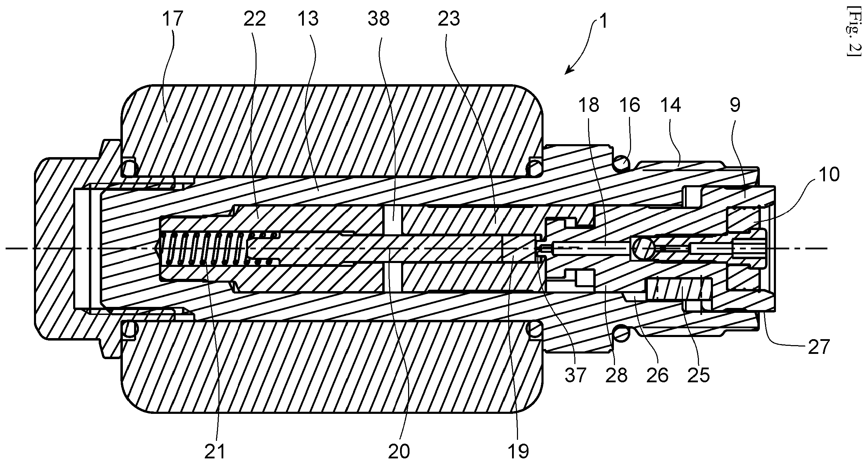

An der Stirnseite des Absperrkolbens 9 ist die Hauptdichtung 10 angeordnet, die vergrößert in Fig. 2 zu erkennen ist. Die Hauptdichtung 10 wirkt mit einem ringförmigen Hauptdichtungssitz 11 zusammen, der den Querkanal 8 gegenüber einem Anschlusskanal 12 abdichtet. Der Anschlusskanal 12 führt zu einem Verteiler, der einerseits mit einer Betankungsleitung (nicht dargestellt) verbunden ist, über welche die Gasflasche betankt wird. Andererseits ist der Verteiler mit einem Verbraucher verbunden, z.B. einen Verbrennungsmotor oder einer Brennstoffzelle, zu dem im Fahrbetrieb das Gas aus der Gasflasche geleitet wird. Auch der Verbraucher ist in den Zeichnungen nicht dargestellt.

In der geschlossenen Stellung wird die Hauptdichtung 10 gegen den Hauptdichtungssitz 11 gedrückt, so dass sie die Fluidverbindung zwischen dem Querkanal 8 und dem Anschlusskanal 12 unterbricht. Die geschlossene Stellung ist sowohl in Fig. 1 als auch in Fig. 2 zu erkennen. In der geöffneten Stellung ist die Hauptdichtung 10 von dem Hauptdichtungssitz 11 weggezogen, so dass sie die genannte Fluidverbindung freigibt.

Die funktionalen Elemente des elektromagnetischen Ventils 1 sind in einer Druckhülse 13 aufgenommen. Die Druckhülse weist an dem in den Fig. 1 und 2 rechtsliegenden, offenen Ende ein Außengewinde 14 auf, das in ein komplementäres Innengewinde 15 des Hauptkörpers 2 eingeschraubt ist. Ein Dichtring 16 dichtet die Verschraubung gegenüber der Umgebung ab.

Die Druckhülse 13 ist von einer Spule 17 umgeben, welche das elektromagnetische Ventil 1 betätigt. Wenn die Spule 17 stromlos ist, ist das Ventil 1 in der in den Fig. 1 und 2 dargestellten geschlossenen Stellung.

Innerhalb der Hauptdichtung 10 liegt innerhalb des Absperrkolbens 9 ein Druckabbaukanal 18, auch Pilotbohrung genannt, der von der Vorsteuerdichtung 19 verschlossen wird. Ein Stößel 20 drückt die Vorsteuerdichtung 19 gegen einen Dichtsitz am linken Ende des Absperrkolbens 9. Bei stromloser Spule 17 wird der Stößel 20 durch eine Feder 21 an seinem linken Ende zum Absperrkolben 9 hingedrückt.

In den Fig. 1 und 2 ist zu erkennen, dass in der Druckhülse 13 zwei Anker 22, 23 angeordnet sind. Der erste Anker 22, auch Kern genannt, ist in das linke, geschlossene Ende der Druckhülse 13 eingepresst. Mit anderen Worten ist der Außendurchmesser des leicht verjüngten Endes des ersten Ankers 22 etwas größer als der Innendurchmesser des verjüngten Endabschnitts der Innenbohrung der Druckhülse 13. Die Druckhülse 13 kann in der Praxis aus austenitischem Stahl mit hohem Nickelanteil bestehen, der eine gute Widerstandsfähigkeit gegen Wasserstoffversprödung aufweist. Der erste Anker 22 kann aus einem ferromagnetischen Werkstoff, insbesondere Stahl, bestehen. Durch das geringe Übermaß des Endabschnitts des ersten Ankers 22 resultiert ein Presssitz, der den ersten Anker 22 verdrehfest und axial unbeweglich in der Druckhülse 13 arretiert.

Rechts von dem ersten Anker 22, das heißt in Richtung des offenen Endes der Druckhülse 13, befindet sich der zweite Anker 23, der axial beweglich innerhalb der Innenbohrung der Druckhülse 13 aufgenommen ist. Beide Anker 22, 23 weisen eine zylindrische Außenwand auf und sind in der zylindrischen Innenbohrung der Druckhülse 13 aufgenommen. Beide Anker 22, 23 weisen ebenfalls mittige Bohrungen auf. Der Stößel 20 durchragt die Bohrungen in beiden Ankern 22, 23 und die Feder 21, die den Stößel 20 zum Absperrkolben 9 hindrückt, ragt in die Bohrung im ersten Anker 22 hinein. Am in Fig. 2 rechten Ende der Innenbohrung des zweiten Ankers 23 ist eine radial nach innen ragende Schulter vorgesehen, welche sicherstellt, dass die Vorsteuerdichtung 19 nicht aus der Innenbohrung des zweiten Ankers 23 herausgeschoben wird. Somit wird über die freie Stirnfläche der Vorsteuerdichtung 19 mittels des Stößels 20, der durch die Feder 21 nach rechts gedrückt wird, der zweite Anker 23 zum Kolben 9 hingedrückt.

Zum Öffnen des Ventils 1 wird die Spule 17 mit Strom beaufschlagt. Dadurch bewegt sich entgegen der Kraft der Feder 21 der zweite Anker 23 aufgrund der elektromagnetischen Kraft zum ersten Anker 22 hin. Dadurch wird die Vorsteuerdichtung 19 vom Vorsteuerdichtungssitz 37 fortbewegt. Durch den Druckabbaukanal 18 kann der hohe Druck aus dem Hauptkanal 7 und dem Querkanal 8 zum Anschlusskanal 12 strömen und dadurch bewirken, dass der Absperrkolben 9 von dem Hauptdichtungssitz 11 fortbewegt wird. Dies ist näher in der EP 1 682 801 B1 beschrieben.

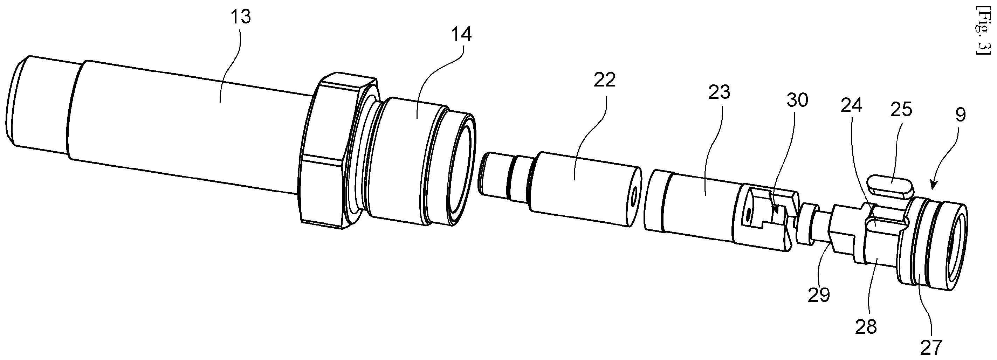

Details des Aufbaus sowie das Zusammenwirken von Druckhülse 13, Absperrkolben 9 und den zwei Ankern 22, 23 sind insbesondere in den Figuren 3 - 5 zu erkennen.

Die Fig. 3 zeigt eine dreidimensionale Explosionsansicht der Druckhülse 13, der Anker 22, 23 und des Absperrkolbens 9 des Ventils 1. Die Druckhülse 13 ist ein hohles, an dem in Fig. 3 linken Ende verschlossenes Bauelement. Sie weist am rechten Ende das Außengewinde 14 auf. In die Druckhülse 13 wird zunächst der erste Anker 22 eingeschoben, dessen linkes, verjüngtes Ende mit dem linken Ende der Druckhülse 13 verpresst wird. In axialer Richtung rechts von dem ersten Anker 22 folgt der zweite Anker 23. Wiederum rechts von dem zweiten beweglichen Anker 23 befindet sich der Absperrkolben 9. Der Absperrkolben 9 weist eine Aussparung 24 auf, in die ein Führungskörper 25 einfügbar ist. Wie in Fig. 3 zu erkennen, entspricht die Kontur des Führungskörpers 25 der Kontur der Aussparung 24. Der Führungskörper 25 ist somit formschlüssig in die Aussparung 24 einfügbar. Im eingefügten Zustand ragt der Führungskörper 25 über die zylindrische Kontur des Absperrkolbens 9 hinaus. Insbesondere in Fig. 2 ist zu erkennen, dass in dem offenen Endbereich der Druckhülse 13 eine in Längsrichtung verlaufende Nut 26 angeordnet ist, in welcher der Führungskörper 25 längs verschiebbar eingeschoben ist. Hierdurch ist sichergestellt, dass sich der Absperrkolben 9 im Betrieb nicht gegenüber der Druckhülse 13 drehen kann. Eine derartige Drehbewegung kann durch die Gasströmung insbesondere beim Betanken hervorgerufen werden. Durch die Nut 26 und den Führungskörper 25, welche formschlüssig ineinandergreifende Führungselemente bilden, ist ein derartiges Drehen konstruktiv ausgeschlossen.

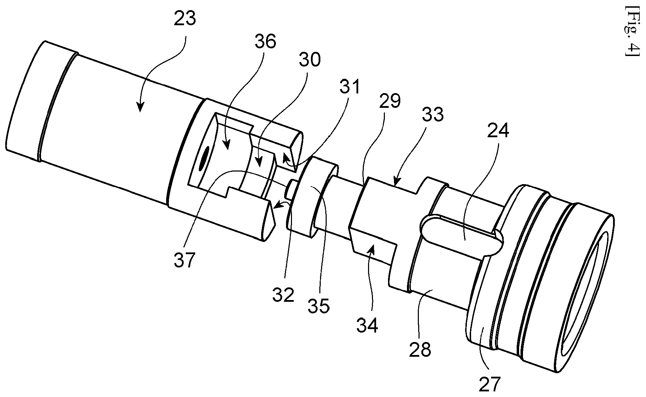

In den Figuren 3 und 4 ist ferner zu erkennen, dass der Absperrkolben 9 auf der in den Zeichnungen rechten Seite einen Kopfabschnitt 27 aufweist, in den die Hauptdichtung 10 (Fig. 2) eingefügt ist. An den Kopfabschnitt 27 schließt sich ein Grundabschnitt 28 an, der gegenüber dem Kopfabschnitt 27 einen reduzierten Durchmesser aufweist. Die Innenbohrung der Druckhülse 13 hat einen komplementären Verlauf, so dass sie eine radiale Schulter aufweist, welche die Strecke begrenzt, um die der Absperrkolben 9 in die Druckhülse 13 eingeschoben werden kann. Die Aussparung 24 für den Führungskörper 25 ist im Grundabschnitt 28 des Absperrkolbens 9 angeordnet.

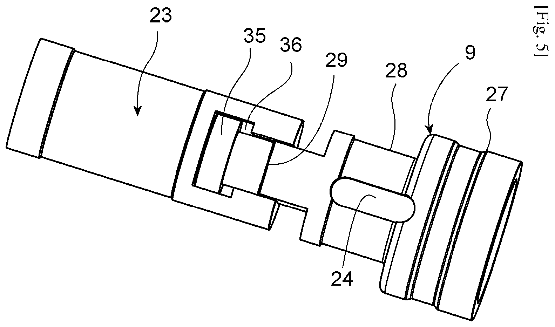

An den Grundabschnitt 28 fügt sich ein Verbindungszapfen 29 an. Der Verbindungszapfen 29 durchragt einen Durchtrittsbereich 30, der in dem zweiten Anker 23 angeordnet ist. Der Durchtrittsbereich 30 weist einander gegenüberliegende flache Wände 31, 32 auf, die in verbundener Stellung von Absperrkolben 9 und zweitem Anker 23 mit zueinander parallelen Seitenwänden 33, 34 des Verbindungszapfens 29 zusammenwirken. An dem dem Kopfabschnitt 27 gegenüberliegenden Ende des Absperrkolbens 9 und somit am Ende des Verbindungszapfens 29 ist ein Zapfenkopf 35 angeordnet, der Randabschnitte des Durchtrittsbereichs 30 des zweiten Ankers 23 hintergreift. Zu diesem Zweck weist der Durchtrittsbereich 30 eine Ausnehmung 36 auf, welche im Wesentlichen eine Einfräsung in das Material des zweiten Ankers 23 in radialer Richtung ist. Der Zapfenkopf 35 ist etwas breiter als der Abstand zwischen den Seitenwänden 33, 34 des Verbindungszapfens 29. Der Zapfenkopf 35 hintergreift somit Randbereiche der Ausnehmung 36. Um den Zapfenkopf 35 in die Ausnehmung 36 einzufügen, wird der Zapfenkopf 35 in der Fig. 4 im Wesentlichen senkrecht zur Zeichnungsebene in die Ausnehmung 36 eingeschoben, bis er die in Fig. 5 erkennbare Position einnimmt.

In Fig. 5 ist zu erkennen, dass der zweite Anker 23 mit geringem Spiel um wenige Millimeter axial verschiebbar mit dem Absperrkolben 9 verbunden ist. Dieses axiale Spiel reicht aus, um durch eine Bewegung des zweiten Ankers 23 die Vorsteuerdichtung 19 vom Vorsteuerdichtungssitz 37 abzuheben, damit durch den Druckabbaukanal (Pilotbohrung) 18 ein Druckausgleich stattfinden kann. Bei einer weitergehenden axialen Bewegung des zweiten Ankers 23 nimmt dieser den Absperrkolben 9 mit. In Fig. 2 ist zu erkennen, dass das axiale Spiel des Absperrkolbens 9 gegenüber dem zweiten Anker 23 erheblich viel kleiner ist als der axiale Spalt 38 zwischen den zwei Ankern 22, 23 in der geschlossenen Stellung des Ventils 1. Somit bewirkt bei Stromzufuhr zur Spule 17 die Verlagerung des zweiten Ankers 23 zum ersten Anker 22 hin zunächst ein Öffnen der Vorsteuerdichtung 19 und anschließend ein Öffnen der Hauptdichtung 10, indem der Absperrkolben 9 vom Hauptdichtungssitz 11 fortgezogen wird.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Liste der Bezugszeichen

1 elektromagnetisches Ventil
2 Hauptkörper
3 zylindrischer Abschnitt
4 Außengewinde
5 Filter
6 Injektor
7 Hauptkanal
8 Querkanal
9 Absperrkolben
10 Hauptdichtung
11 Hauptdichtungssitz
12 Anschlusskanal
13 Druckhülse
14 Außengewinde
15 Innengewinde
16 Dichtring
17 Spule
18 Druckabbaukanal
19 Vorsteuerdichtung
20 Stößel
21 Feder
22 erster Anker, Kern
23 zweiter Anker
24 Aussparung
25 Führungskörper, Führungselement
26 Nut, Führungselement
27 Kopfabschnitt
28 Grundabschnitt
29 Verbindungszapfen
30 Durchtrittsbereich
31 Wand des Durchtrittsbereichs
32 Wand des Durchtrittsbereichs
33 Seitenwand des Verbindungszapfens
34 Seitenwand des Verbindungszapfens
35 Zapfenkopf
36 Ausnehmung
37 Vorsteuerdichtungssitz
38 Spalt

## Patentansprüche

1. Elektromagnetisches Ventil (1), insbesondere für eine Gasflasche für gasbetriebene Kraftfahrzeuge, mit
• einem Hauptkörper (2);
• einer einseitig geschlossenen Druckhülse (13), die an dem Hauptkörper (2) befestigt ist;
• einer die Druckhülse (13) umgebenden Spule (17);
• mindestens einem in der Druckhülse (13) angeordneten Anker (22, 23);
• und mindestens einem Absperrkolben (9), der axial verschiebbar in der Druckhülse (13) aufgenommen ist und der eine Hauptdichtung (10) aufweist, welche gegen einen Hauptdichtungssitz (11) des Hauptkörpers (2) drückbar ist;
**dadurch gekennzeichnet, dass** der axial verschiebbare Absperrkolben (9) und die Druckhülse (13) formschlüssig ineinandergreifende Führungselemente (25, 26) aufweisen, die den Absperrkolben (9) verdrehfest an der Druckhülse (13) führen.

2. Elektromagnetisches Ventil nach Anspruch 1, **dadurch gekennzeichnet, dass** die Führungselemente folgendes umfassen:
• eine axiale Nut (26);
• einen Führungskörper (25);
wobei die Nut (26) in einem der beiden zueinander drehgesicherten Elemente, nämlich Druckhülse (13) und Absperrkolben (9), angeordnet ist, wobei der Führungskörper (25) an dem anderen dieser beiden Elemente (14, 9) angeordnet ist und in die Nut (26) hineinragt.

3. Elektromagnetisches Ventil nach Anspruch 2, **dadurch gekennzeichnet, dass** die Nut (26) an der Druckhülse (13) angeordnet ist und der Absperrkolben (9) eine Aussparung (24) aufweist, in die der Führungskörper (25) eingefügt ist.

4. Elektromagnetisches Ventil nach Anspruch 3, **dadurch gekennzeichnet, dass** der Absperrkolben (9) einen Kopfabschnitt (27) und einen Grundabschnitt (28) aufweist, wobei der Kopfabschnitt (27) einen größeren Durchmesser als der Grundabschnitt (28) aufweist und die Aussparung (24) im Grundabschnitt (28) angeordnet ist.

5. Elektromagnetisches Ventil nach Anspruch 4, **dadurch gekennzeichnet, dass** die Druckhülse (13) an ihrem offenen Endbereich einen ersten Innendurchmesser zur Aufnahme des Kopfabschnitts (27) und an dem daran anschließenden mittleren Bereich einen zweiten Innendurchmesser zur Aufnahme des Grundabschnitts (28) aufweist, wobei der zweite Innendurchmesser kleiner als der erste ist.

6. Elektromagnetisches Ventil nach einem der vorangehenden Ansprüche, **dadurch gekennzeichnet, dass** in der Druckhülse (13) ein axial verschiebbarer Anker (23) aufgenommen ist, der verdrehfest mit dem Absperrkolben (9) verbunden ist.

7. Elektromagnetisches Ventil nach Anspruch 6, **dadurch gekennzeichnet, dass** ein erster Anker (22) in die Druckhülse (13) eingepresst ist und dass ein zweiter Anker (23) in der Druckhülse (13) zwischen dem ersten Anker (22) und dem Absperrkolben (9) axial verschiebbar aufgenommen ist.

8. Elektromagnetisches Ventil nach Anspruch 6 oder 7, **dadurch gekennzeichnet, dass** der axial verschiebbare Anker (23) und der Absperrkolben (9) formschlüssig ineinandergreifende Verbindungselemente aufweisen, die den zweiten Anker (23) und den Absperrkolben (9) verdrehfest verbinden.

9. Elektromagnetisches Ventil nach Anspruch 6, 7 oder 8, **dadurch gekennzeichnet, dass** die Verbindungselemente eine axiale Bewegung des axial verschiebbaren Ankers (23) auf den Absperrkolben (9) übertragen.

10. Elektromagnetisches Ventil nach einem der Ansprüche 6 bis 9, **dadurch gekennzeichnet, dass** der Absperrkolben (9) einen Verbindungszapfen (29) aufweist, dessen zum geschlossenen Ende der Druckhülse (17) weisendes Ende einen vergrößerten Zapfenkopf (35) aufweist und dass der axial verschiebbare Anker (23) eine Ausnehmung (36) für den Zapfenkopf (35) und einen Durchtrittsbereich (30) für den Verbindungszapfen (29) aufweist, wobei der Zapfenkopf (35) Randabschnitte des Durchtrittsbereichs (30) formschlüssig hintergreift und wobei der Verbindungszapfen (29) verdrehfest im Durchtrittsbereich (30) gehalten ist.

11. Elektromagnetisches Ventil nach einem der vorangehenden Ansprüche, **dadurch gekennzeichnet, dass** die Druckhülse (13) aus austenitischem Stahl gefertigt ist, der vorzugsweise einen hohen Nickelanteil aufweist.

12. Elektromagnetisches Ventil nach einem der vorangehenden Ansprüche, **dadurch gekennzeichnet, dass** die Druckhülse (13) ein einstückiges Bauteil ist.

## Claims

1. An Electromagnetic valve (1), in particular for a gas cylinder for gas-powered motor vehicles, comprising
• a main body (2);
• a pressure sleeve (13) closed on one side, which is attached to the main body (2);
• a coil (17) surrounding the pressure sleeve (13);
• at least one armature (22, 23) arranged in the pressure sleeve (13);
• and at least one shut-off piston (9) which is received in the pressure sleeve (13) so as to be axially displaceable and which has a main seal (10) configured to be pressed against a main seal seat (11) of the main body (2);
**characterized in that** the axially displaceable shut-off piston (9) and the pressure sleeve (13) comprise form-fitting interlocking guide elements (25, 26) that guide the shut-off piston (9) in a rotationally fixed manner on the pressure sleeve (13).

2. The electromagnetic valve according to claim 1, **characterized in that** the guide elements comprise:
• an axial groove (26);
• a guide body (25);
wherein the groove (26) is arranged in one of the two elements secured against rotation relative to one another, namely the pressure sleeve (13) and the shut-off piston (9), wherein the guide body (25) is arranged on the other of these two elements (14, 9) and projects into the groove (26).

3. The electromagnetic valve according to claim 2, **characterized in that** the groove (26) is arranged on the pressure sleeve (13) and the shut-off piston (9) has a recess (24) into which the guide body (25) is inserted.

4. The electromagnetic valve according to claim 3, **characterized in that** the shut-off piston (9) comprises a head portion (27) and a base portion (28), wherein the head portion (27) has a larger diameter than the base portion (28) and the recess (24) is arranged in the base portion (28).

5. The electromagnetic valve according to claim 4, **characterized in that** the pressure sleeve (13) has, at its open end region, a first inner diameter for receiving the head portion (27) and, at the adjacent middle region, a second inner diameter for receiving the base portion (28), wherein the second inner diameter is smaller than the first.

6. The electromagnetic valve according to one of the preceding claims, **characterized in that** the pressure sleeve (13) accommodates an axially displaceable armature (23) that is fixed to the shut-off piston (9) in a rotationally fixed manner.

7. The electromagnetic valve according to claim 6, **characterized in that** a first armature (22) is pressed into the pressure sleeve (13) and that a second armature (23) is accommodated within the pressure sleeve (13) between the first armature (22) and the shut-off piston (9) in an axially displaceable manner.

8. The electromagnetic valve according to claim 6 or 7, **characterized in that** the axially displaceable armature (23) and the shut-off piston (9) have form-fitting interlocking connecting elements that connect the second armature (23) and the shut-off piston (9) in a rotationally fixed manner.

9. The electromagnetic valve according to claim 6, 7, or 8, **characterized in that** the connecting elements transmit axial movement of the axially displaceable armature (23) to the shut-off piston (9).

10. The electromagnetic valve according to any one of claims 6 to 9,
**characterized in that** the shut-off piston (9) comprises a connecting pin (29), the end of which facing the closed end of the pressure sleeve (17) has an enlarged pin head (35), and that the axially displaceable armature (23) comprises a recess (36) for the pin head (35) and a passage region (30) for the connecting pin (29), wherein the pin head (35) engages behind edge portions of the passage region (30) in a form-fitting manner and wherein the connecting pin (29) is held in the passage region (30) in a rotationally fixed manner.

11. The electromagnetic valve according to one of the preceding claims,
**characterized in that** the pressure sleeve (13) is made of austenitic steel, which preferably has a high nickel content.

12. The electromagnetic valve according to one of the preceding claims,
**characterized in that** the pressure sleeve (13) is a one-piece component.

## Revendications

1. Soupape électromagnétique (1), en particulier pour une bouteille de gaz pour des véhicules à moteur fonctionnant au gaz, avec
• un corps principal (2) ;
• un manchon de pression (13) fermé d'un côté, qui est fixé sur le corps principal (2) ;
• une bobine (17) entourant le manchon de pression (13) ;
• au moins une armature (22, 23) disposée dans le manchon de pression (13) ;
• et au moins un piston d'arrêt (9), qui est logé de manière à pouvoir coulisser axialement dans le manchon de pression (13) et qui comporte un joint d'étanchéité principal (10), qui peut être pressé contre un siège (11) de joint d'étanchéité principal du corps principal (2) ;
**caractérisée en ce que** le piston d'arrêt (9) pouvant être coulissé axialement et le manchon de pression (13) comportent des éléments de guidage (25, 26) s'emboîtant les uns dans les autres par complémentarité de forme, qui guident le piston d'arrêt (9) de manière solidaire en rotation sur le manchon de pression (13).

2. Soupape électromagnétique selon la revendication 1, **caractérisée en ce que** les éléments de guidage comprennent les éléments suivants :
• une rainure axiale (26) ;
• un corps de guidage (25) ;
la rainure (26) étant disposée dans un des deux éléments bloqués en rotation l'un par rapport à l'autre, à savoir le manchon de pression (13) et le piston d'arrêt (9), le corps de guidage (25) étant disposé sur l'autre desdits deux éléments (14, 9) et dépassant dans la rainure (26).

3. Soupape électromagnétique selon la revendication 2, **caractérisée en ce que** la rainure (26) est disposée sur le manchon de pression (13) et le piston d'arrêt (9) comporte un évidement (24), dans lequel est inséré le corps de guidage (25).

4. Soupape électromagnétique selon la revendication 3, **caractérisée en ce que** le piston d'arrêt (9) comporte une section de tête (27) et une section de base (28), la section de tête (27) présentant un diamètre plus grand que la section de base (28) et l'évidement (24) étant disposé dans la section de base (28).

5. Soupape électromagnétique selon la revendication 4, **caractérisée en ce que** le manchon de pression (13) présente, dans sa zone d'extrémité ouverte, un premier diamètre intérieur destiné à recevoir la section de tête (27) et, sur la zone centrale s'y raccordant, un deuxième diamètre intérieur destiné à recevoir la section de base (28), le deuxième diamètre intérieur étant inférieur au premier.

6. Soupape électromagnétique selon l'une des revendications précédentes, **caractérisée en ce qu'**est logée dans le manchon de pression (13) une armature (23) pouvant être coulissée axialement, qui est reliée de manière solidaire en rotation au piston d'arrêt (9).

7. Soupape électromagnétique selon la revendication 6, **caractérisée en ce qu'**une première armature (22) est enfoncée dans le manchon de pression (13) et qu'une deuxième armature (23) est logée de manière à pouvoir être coulissée axialement entre la première armature (22) et le piston d'arrêt (9) dans le manchon de pression (13).

8. Soupape électromagnétique selon la revendication 6 ou 7, **caractérisée en ce que** l'armature (23) pouvant être coulissée axialement et le piston d'arrêt (9) comportent des éléments de liaison s'emboîtant les uns dans les autres par complémentarité de forme, qui relient de manière solidaire en rotation la deuxième armature (23) et le piston d'arrêt (9).

9. Soupape électromagnétique selon la revendication 6, 7 ou 8, **caractérisée en ce que** les éléments de liaison transmettent un mouvement axial de l'armature (23) pouvant être coulissée axialement au piston d'arrêt (9).

10. Soupape électromagnétique selon l'une des revendications 6 à 9,
**caractérisée en ce que** le piston d'arrêt (9) comporte un tourillon de liaison (29), dont l'extrémité pointant vers l'extrémité fermée du manchon de pression (17) comporte une tête de tourillon (35) agrandie et **en ce que** l'armature (23) pouvant être coulissée axialement comporte un évidement (36) pour la tête de tourillon (35) et une zone de passage (30) pour le tourillon de liaison (29), la tête de tourillon (35) venant en prise par l'arrière par complémentarité de forme avec des sections de bord de la zone de passage (30), et le tourillon de liaison (29) étant maintenu de manière solidaire en rotation dans la zone de passage (30).

11. Soupape électromagnétique selon l'une des revendications précédentes,
**caractérisée en ce que** le manchon de pression (13) est produit à partir d'acier austénitique, qui comporte de préférence une teneur élevée en nickel.

12. Soupape électromagnétique selon l'une des revendications précédentes, **caractérisée en ce que** le manchon de pression (13) est un composant monobloc.
